(19) Europäisches Patentamt
European Patent Office
Office européen des brevets

(11) **EP 4 553 941 A1**

(12) **EUROPEAN PATENT APPLICATION**
published in accordance with Art. 153(4) EPC

(43) Date of publication:
**14.05.2025 Bulletin 2025/20**

(21) Application number: **23871528.8**

(22) Date of filing: **14.08.2023**

(51) International Patent Classification (IPC):
***H01M 10/052*** (2010.01) ***H01M 4/13*** (2010.01)
***H01M 4/62*** (2006.01) ***H01M 6/18*** (2006.01)
***H01M 10/0562*** (2010.01) ***H01M 50/117*** (2021.01)

(52) Cooperative Patent Classification (CPC):
**H01M 4/13; H01M 4/62; H01M 6/18; H01M 10/052; H01M 10/0562; H01M 50/117;** Y02E 60/10; Y02P 70/50

(86) International application number:
**PCT/JP2023/029432**

(87) International publication number:
**WO 2024/070286 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022 JP 2022155351**

(71) Applicant: **Murata Manufacturing Co., Ltd.**
**Nagaokakyo-shi, Kyoto 617-8555 (JP)**

(72) Inventor: **TAKANO, Ryohei**
**Nagaokakyo-shi, Kyoto 617-8555 (JP)**

(74) Representative: **Reddie & Grose LLP**
**The White Chapel Building**
**10 Whitechapel High Street**
**London E1 8QS (GB)**

(54) **SOLID-STATE BATTERY**

(57) The present invention is to provide a solid-state battery having an exterior portion including an oxide ceramic that can form an exterior portion being sufficiently excellent in moisture resistance and being more sufficiently excellent in reaction resistance to a solid electrolyte. The present invention relates to a solid-state battery having an exterior portion 2 including an oxide ceramic containing: Li (lithium); Mg (magnesium); and one or more elements (M) selected from the group consisting of Group 4 and Group 5 elements.

FIG. 1

FIG. 1

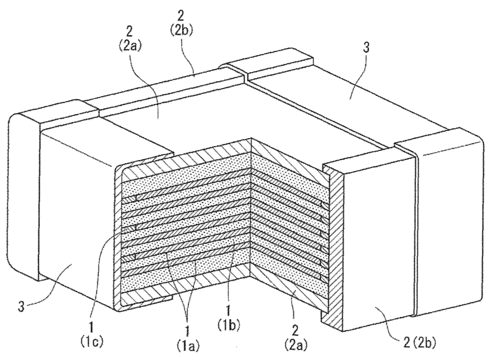


EP 4 553 941 A1

## Description

### TECHNICAL FIELD

The present invention relates to a solid-state battery.

### BACKGROUND ART

In recent years, the demand for batteries as power sources for portable electronic devices such as mobile phones and portable personal computers has been greatly expanded. In batteries used for such applications, an electrolyte (electrolytic solution) such as an organic solvent has been conventionally used as a medium for moving ions. However, a battery having the above configuration has a risk of leakage of the electrolytic solution. In addition, the organic solvent or the like used as the electrolytic solution is a combustible substance. Therefore, it is required to enhance the safety of the battery.

Therefore, in order to enhance the safety of the battery, a solid-state battery using a solid electrolyte as an electrolyte instead of the electrolytic solution has been studied.

For example, Patent Documents 1 to 4 propose a solid-state battery having an exterior portion containing an oxide ceramic on an outer surface of a battery element including a positive electrode layer, a negative electrode layer, and a solid electrolyte layer therebetween.

### PRIOR ART DOCUMENT

### PATENT DOCUMENTS

Patent Document 1: WO 2019/167856 A
Patent Document 2: Japanese Patent Application Laid-Open No. 2007-173212
Patent Document 3: Japanese Patent Application Laid-Open No. 2003-92092
Patent Document 4: WO 2019/181909 A

### SUMMARY OF THE INVENTION

#### Problem to be solved by the invention

However, the inventor of the present invention has found that the conventional fixed battery described above has the following new problem.

When the oxide ceramic included in the exterior portion contains no Li ions, the solid electrolyte contained in the battery element reacts with the oxide ceramic, the solid electrolyte is decomposed, and a byproduct is generated. In particular, when a highly reactive solid electrolyte having a garnet type or LISICON type crystal structure is used, the solid electrolyte is easily decomposed.

Therefore, Li ions are contained in the oxide ceramic, and as a result, it has been found that this side reaction can be suppressed. However, the formation of the exterior portion including the oxide ceramic containing Li ions deteriorated the moisture resistance of the exterior portion itself.

An object of the present invention is to provide a solid-state battery having an exterior portion including an oxide ceramic that can form an exterior portion being sufficiently excellent in moisture resistance and being more sufficiently excellent in reaction resistance to a solid electrolyte.

#### Means for solving the problem

The present invention relates to a solid-state battery having an exterior portion including an oxide ceramic containing:

Li (lithium);
Mg (magnesium); and
one or more elements (M) selected from the group consisting of Group 4 and Group 5 elements.

Advantageous effect of the invention

The present invention can provide a solid-state battery having an exterior portion including an oxide ceramic that can form an exterior portion being sufficiently excellent in moisture resistance and being more sufficiently excellent in reaction resistance to a solid electrolyte.

BRIEF EXPLANATION OF DRAWINGS

FIG. 1 is a schematic view showing an example of a solid-state battery of the present invention, and is a composite view of a perspective view and a sectional view.
FIG. 2 is a schematic perspective view showing another example of a solid-state battery of the present invention.
FIG. 3 shows XRD measurement result data when reaction resistance is determined in Example 4.

MODE FOR CARRYING OUT THE INVENTION

[Solid-state battery]

The present invention provides a solid-state battery. The term "solid-state battery" as used herein refers in a broad sense to a battery in which its components (particularly an electrolyte layer) are constituted of solids, and refers in a narrow sense to an "all-solid-state battery" in which its components (particularly all the components) are constituted of solids. In one preferred embodiment, the solid-state battery according to the present invention is a stacked solid-state battery in which the respective layers forming the battery constituent unit are stacked on each other, and preferably each of such layers is made of a sintered body. The "solid-state battery" as used herein includes what is called a "secondary battery" capable of repeating charging and discharging, and a "primary battery" capable of discharging only. In one preferred embodiment of the present invention, the "solid-state battery" is a "secondary battery". The "secondary battery" is not excessively limited by its name, and can encompass, for example, an electrochemical device such as a "power storage device". The term "solid electrolyte" as used herein refers to one that includes no gel-like or liquid electrolyte (liquid).

The term "plan view" in the present specification refers to a state (a top view or a bottom view) when an object is viewed from the upper side or the lower side along a thickness direction based on a stacking direction of layers described later and constituting the solid-state battery. In addition, the "sectional view" as used herein refers to a sectional state (sectional view) when viewed from a direction substantially perpendicular to the thickness direction based on the stacking direction L of the layers to be described later that constitute the solid-state battery. The "side view" is a state when the solid-state battery is mounted and viewed from the side of a thickness (height) direction thereof, and means the same as lateral view. The mounting is a mounting with a surface (planar surface) of the maximum area constituting the appearance of the solid-state battery being a bottom surface. The "vertical direction" and "horizontal direction" as used directly or indirectly herein correspond to a vertical direction and a horizontal direction in the drawings, respectively. Unless otherwise specified, the same reference signs or symbols shall denote the same members or sites or the same meanings. In a preferred embodiment, it can be grasped that a vertical downward direction (that is, a direction in which gravity acts) corresponds to a "downward direction", and the opposite direction corresponds to an "upward direction".

The solid-state battery of the present invention may have any shape in a plan view, and typically has a rectangular shape. The rectangular shape encompasses squares and rectangles.

The solid-state battery of the present invention has, for example, a layered structure (particularly, a stacked structure) as shown in FIG. 1. The solid-state battery of the present invention has a battery element 1 and an exterior portion 2 covering a surface of the battery element 1, and typically further has an external electrode 3 for drawing electric power (particularly current) generated in the battery element to the outside. FIG. 1 is a schematic sectional view showing an example of a solid-state battery of the present invention.

(Exterior portion)

The exterior portion 2 is a member covering the outside of the battery element 1, and has a function of covering the battery element 1 to prevent entry of moisture into the battery element 1. The exterior portion 2 typically has not only such a function but also a function of electrically, physically, and chemically protecting a battery element, and thus may also be referred to as a protective layer or a protective film. The exterior portion 2 includes a main surface exterior portion 2a (for example, a set of main surface exterior portions 2a) that covers the main surface of the battery element 1 and a side surface exterior portion 2b (for example, a set of side surface exterior portions 2b) that covers the side surface of the battery element 1. The exterior portion 2 typically has a layer form or a film form. The exterior portion 2 may be in direct contact with the surface (in particular, the main surface and/or the side surface) of the battery element 1, or may be in indirect contact with the surface with another layer (or film) interposed therebetween. From the viewpoint of more sufficiently exhibiting the effect of the present invention, it is preferable that the exterior portion 2 is in direct contact with the surface (particularly, the main surface and/or the side surface) of the battery element 1.

In the solid-state battery of the present invention, the exterior portion 2 includes a specific oxide ceramic. In the present invention, at least one of the main surface exterior portion and the side surface exterior portion may include a specific oxide ceramic. From the viewpoint of further improving the moisture resistance and the reaction resistance, it is preferable that both the main surface exterior portion and the side surface exterior portion include a specific oxide ceramic.

In the present specification, the moisture resistance is a property of preventing entry of moisture, and may be a property of being hardly affected by moisture particularly under high temperature and high humidity (for example, resistance to moisture absorption).

The reaction resistance is a property that the exterior portion (particularly, the oxide ceramic included in the exterior portion) hardly reacts (for example, side reaction) when fired (for example, at 800°C for 5 hours) with the solid electrolyte included in the battery element. The reaction resistance may be a property that the oxide ceramic and the solid electrolyte hardly react each other particularly when fired together.

In the present invention, the oxide ceramic included in the exterior portion contains: Li (lithium); Mg (magnesium); and one or more elements (M) selected from the group consisting of Group 4 and Group 5 elements. Specifically, the element M is one or more elements selected from the group consisting of Ti (titanium), Zr (zirconium), Hf (hafnium), Ta (tantalum), and Nb (niobium). The element M preferably includes Ti from the viewpoint of further improving the moisture resistance, and more preferably includes only Ti or includes Ti and Zr or Ta. In the present invention, the oxide ceramic contains Li, Mg, and the element M in combination, thereby allowing to provide an exterior portion excellent in moisture resistance and reaction resistance. When the oxide ceramic does not include Li, does not include Mg, and does not include the element M, at least one of the properties of moisture resistance and reaction resistance is deteriorated.

In the oxide ceramic, the molar ratios Li/M and Mg/M are not particularly limited, and are preferably within the following ranges from the viewpoint of further improving the moisture resistance and the reaction resistance.

· Li/M

preferably, $0 < Li/M \leq 5$;
more preferably, $0.8 \leq Li/M \leq 4.2$; and
still more preferably, $0.8 \leq Li/M \leq 2.1$.

· Mg/M

preferably, $0.1 \leq Mg/M \leq 9.8$;
more preferably, $0.3 \leq Mg/M \leq 9.8$; and
still more preferably, $0.8 \leq Mg/M \leq 4.2$.

As Li/M and Mg/M in the oxide ceramic, there are used values obtained by calculating from the contents (or molar ratio) of Li, Mg, and M measured by the same method as the method for analyzing the chemical composition of the oxide ceramic described later.

The oxide ceramic may have any chemical composition as long as it has the above molar ratio. From the viewpoint of further improving the moisture resistance and the reaction resistance, the oxide ceramic preferably has a chemical composition represented by the following general formula (1).

[Chemical Formula 1] $Li_{\alpha 1}A_{\alpha 2}Mg_{\beta}M_{\gamma}O_{\delta}$ (1)

In the formula (1), A is one or more elements selected from the group consisting of Na, K, Rb, Ca, Sr, Ba, Sc, Y, Mo, W, Zn, Al, Ga, Ge, Sn, Sb, and Bi.

M is one or more elements selected from the same group as the element M described above, and from the viewpoint of further improving the moisture resistance, and preferably includes one or more elements selected from the group consisting of Ti, Zr, Hf, Nb, and Ta, more preferably includes Ti, and still more preferably includes only Ti, or includes Ti and Zr or Ta.

In the formula (1), $\alpha 1/\gamma$ and $\beta/\gamma$ correspond to the above-described molar ratios Li/M and Mg/M, respectively. Therefore, $\alpha 1/\gamma$ satisfies the same range as the molar ratio Li/M described above, and from the viewpoint of further improving the moisture resistance and the reaction resistance, preferably satisfies the preferable range of Li/M, more preferably satisfies the more preferable range of Li/M, and still more preferably satisfies the further preferable range of

Li/M. $\beta/\gamma$ satisfies the same range as the molar ratio Mg/M described above, and from the viewpoint of further improving the moisture resistance and the reaction resistance, preferably satisfies the preferable range of Mg/M, more preferably satisfies the more preferable range of Mg/M, and still more preferably satisfies the further preferable range of Mg/M.

$$\delta = \{\alpha 1 + a\alpha 2 + 2\beta + n\gamma\}/2$$

(n is the average valence of M and M', and a is the average valence of A)

Specifically, n is the average valence of M and M'. The average valence of M and M' is, for example, the same value as the above-described average valence of $A^1$ in a case where the number of elements X having a valence of a+ is n1, the number of elements Y having a valence of b+ is n2, and the number of elements Z having a valence of c+ is n3 in the elements represented by $B^1$.

a is an average valence of A. The average valence of A is, for example, a value represented by $(n1 \times a + n2 \times b + n3 \times c)/(n1 + n2 + n3)$ when the number of elements X having a valence of a+ is n1, the number of elements Y having a valence of b+ is n2, and the number of elements Z having a valence of c+ is n3 in the elements represented by A.

The oxygen number $\delta$ may be deviated from the above value by about $\pm 10\%$. That is, oxygen deficiency or interstitial oxygen may be included in part.

In the formula (1), $\alpha 1$ typically satisfies $0 < \alpha 1 < 1.0$, and from the viewpoint of further improving the moisture resistance and the reaction resistance, preferably satisfies $0.15 < \alpha 1 < 0.70$, and more preferably satisfies $0.29 \le \alpha 1 \le 0.50$.

$\alpha 2$ typically satisfies $0 \le \alpha 2 \le 1.0$, and from the viewpoint of further improving the moisture resistance and the reaction resistance, preferably satisfies $0 \le \alpha 2 \le 0.5$ and is more preferably 0.

$\beta$ typically satisfies $0 < \beta < 1.0$, and from the viewpoint of further improving the moisture resistance and the reaction resistance, preferably satisfies $0.03 \le \beta < 0.85$, and more preferably satisfies $0.25 \le \beta \le 0.60$.

$\gamma$ typically satisfies $0 < y < 1.0$, and from the viewpoint of further improving the moisture resistance and the reaction resistance, preferably satisfies $0.05 < \gamma < 0.35$, and more preferably satisfies $0.14 \le \gamma \le 0.26$.

The chemical composition of the oxide ceramic can be determined by ICP analysis (inductively coupled plasma method), LA-ICP-MS (laser ablation ICP mass spectrometry) analysis, or the like. EDX (energy dispersive X-ray spectroscopy) or WDX (wavelength dispersive X-ray spectroscopy) may be used. The chemical composition may be obtained by performing quantitative analysis (composition analysis) at arbitrary 100 points of each of arbitrary 100 sintered grains and calculating the average of the resulting values.

The crystal structure of the oxide ceramic is not particularly limited, and may have, for example, a rock salt type crystal structure, a spinel type crystal structure, a layered rock salt type crystal structure, or a mixed phase structure thereof. From the viewpoint of further improving the moisture resistance and the reaction resistance, the oxide ceramic preferably has a rock salt type crystal structure and/or a spinel type crystal structure (particularly a rock salt type crystal structure or a mixed phase structure of a rock salt type crystal structure and a spinel type crystal structure), and more preferably has a rock salt type crystal structure.

The statement that the oxide ceramic has a rock salt type crystal structure means that the oxide ceramic has not only a "crystal structure of a rock salt type" but also a "crystal structure resembling a rock salt type". Specifically, the oxide ceramic has a crystal structure that can be recognized as a crystal structure of a rock salt type or resembling a rock salt type by those skilled in the art of solid-state batteries in X-ray diffraction. More specifically, the oxide ceramic may show, in X-ray diffraction, one or more main peaks corresponding to a Miller index unique to a so-called crystal structure of a rock salt type, diffraction pattern: ICDD Card No. 00-004-0829, at a predetermined incident angle, or as a rock saltlike crystal structure, one or more main peaks corresponding to a Miller index unique to a so-called crystal structure resembling a rock salt type may show one or more main peaks having different incident angles (that is, peak positions or diffraction angles) and intensity ratios (that is, peak intensities or diffraction intensity ratios) due to a difference in composition. Examples of a typical diffraction pattern of a crystal structure resembling a rock salt type include ICDD Card No. 00-036-0308.

The statement that the oxide ceramic has a spinel type crystal structure means that the oxide ceramic has not only a "crystal structure of a spinel type" but also a "crystal structure resembling a spinel type". Specifically, the oxide ceramic has a crystal structure that can be identified as a crystal structure of a spinel type or resembling a spinel type by those skilled in the field of solid-state batteries in X-ray diffraction. More specifically, the oxide ceramic may show, in X-ray diffraction, one or more main peaks corresponding to a Miller index unique to a so-called crystal structure of a spinel type (diffraction pattern: ICDD Card No. 01-072-6998) at a predetermined incident angle, or as a crystal structure resembling a spinel type, one or more main peaks corresponding to a Miller index unique to a so-called crystal structure of a spinel type may show one or more main peaks having different incident angles (that is, peak positions or diffraction angles) and intensity ratios (that is, peak intensities or diffraction intensity ratios) due to a difference in composition.

The mixed phase structure in which the oxide ceramic has a rock salt type crystal structure and a spinel type crystal structure means that the oxide ceramic contains an oxide ceramic having both crystal structures of the rock salt type crystal structure and the spinel type crystal structure described above.

The statement that the oxide ceramic has a layered rock salt type crystal structure means that the oxide ceramic has not only a "crystal structure of a layered rock salt type" but also a "crystal structure resembling a layered rock salt type". Specifically, the oxide ceramic has a layered crystal structure that can be recognized as a crystal structure of a layered rock salt type or resembling a layered rock salt type by those skilled in the art of solid-state batteries in X-ray diffraction. More specifically, the oxide ceramic may show, in X-ray diffraction, one or more main peaks corresponding to a Miller index unique to a so-called crystal structure pf a layered rock salt type, diffraction pattern: ICDD Card No. 00-033-0831, at a predetermined incident angle, or as a crystal structure resembling a layered rock salt type, one or more main peaks corresponding to a Miller index unique to a so-called crystal structure of a layered rock salt type may show one or more main peaks having different incident angles (that is, peak positions or diffraction angles) and intensity ratios (that is, peak intensities or diffraction intensity ratios) due to a difference in composition. Examples of a typical diffraction pattern of a crystal structure resembling a layered rock salt type include ICDD Card No. 00-033-0843.

The oxide ceramic may be produced by any method as long as the method can produce an oxide ceramic of the desired composition. For example, the oxide ceramic can be obtained by weighing out raw materials including a Li source, a Mg source, and an element M source so as to provide a desired composition, thoroughly mixing with water, and then firing. The firing temperature is not particularly limited, and may be, for example, 800°C or more and 1200°C or less (particularly, 850°C or less and 1100°C or less). The firing time is not particularly limited, and may be, for example, 1 hour or more and 10 hours or less (particularly 3 hours or more and 7 hours or less). As a Li source, for example, lithium carbonate ($Li_2CO_3$) can be used. As a Mg source, for example, magnesium oxide (MgO) can be used. As an element M source, for example, titanium oxide ($TiO_2$), niobium oxide ($Nb_2O_5$), zirconium oxide ($ZrO_2$), tantalum oxide ($Ta_2O_5$), and hafnium oxide ($HfO_2$) can be used. In the production of the oxide ceramic, the final composition of the obtained oxide ceramic is determined by the ratio of the Li source, Mg source, and element M source during charging. Therefore, adjusting the charging ratio of the Li source, the Mg source, and the element M source can control the above-described molar ratios Li/M and Mg/M.

The present invention does not preclude the exterior portion 2 from including another oxide ceramic in addition to the specific oxide ceramic described above. Another oxide ceramic includes an oxide including Bi. Examples thereof include a Li-Bi-O based oxide, a Li-Mg-Bi-O based oxide, $Bi_2O_3$, and a Mg-Bi-O based oxide. The content of the specific oxide ceramic in the exterior portion 2 may typically be an area percentage of 60% or more and 100% or less, and particularly an area percentage of 90% or more and 100% or less. The area percentage can be measured as follows. First, a solid-state battery is broken such that the broken surface of the ceramic exterior portion is exposed. This broken surface is polished using a crosssection polisher or the like to provide a polished surface. EDX analysis is performed on any surface in the region of the exterior portion of the polished surface, and the region in which not only Mg, element M, and element A are detected but also Li is detected by TOF-SIMS is regarded as the region of the specific oxide ceramic described above. As described above, the measurement can be possible by calculating the percentage of the area of the oxide ceramic to the area of the exterior portion.

The thickness of the exterior portion 2 is typically preferably 1 $\mu$m or more and 500 $\mu$m or less, more preferably 5 $\mu$m or more and 100 $\mu$m or less, and still more preferably 5 $\mu$m or more and 50 $\mu$m or less. As the thickness of the exterior portion 2, an average thickness for the thickness at arbitrary 100 positions is used.

The relative density of the exterior portion 2 is typically 90% or more and 100% or less, and preferably 95% or more and 100% or less. The relative density of the exterior portion may be measured using the Archimedes method.

The exterior portion 2 typically has an insulating property. The insulating property is a property having neither ion conductivity nor electron conductivity. For example, the ion conductivity of the exterior portion 2 is typically $1\times10^{-7}$ S/cm or less, and particularly the ion conductivity is $1 \times 10^{-10}$ S/cm or less. The ion conductivity of the exterior portion 2 is typically $1\times10^{-18}$ S/cm or more. For example, the electron conductivity of the exterior portion 2 is typically $1\times10^{-7}$ S/cm or less, particularly $1\times10^{-10}$ S/cm or less. The electron conductivity of the exterior portion 2 is typically $1\times10^{-18}$ S/cm or more.

The oxygen permeability of the exterior portion 2 in the thickness direction may be, for example, $10^{-1}$ cc/m$^2$/day/atmospheric pressure or less, particularly $10^{-3}$ cc/m$^2$/day/atmospheric pressure or less.

$H_2O$ permeability in the thickness direction of the exterior portion 2 may be, for example, $10^{-2}$ g/m$^2$/day or less, particularly $10^{-4}$ g/m$^2$/day or less. As the $H_2O$ permeability, a value measured at 25°C by a cup method, a carrier gas method, a pressure deposition method, or a Ca corrosion method is used.

The main surface exterior portion 2a and the side surface exterior portion 2b have a form as separate members from each other (or a separate member structure) in FIG. 1, but may have a form in which the main surface exterior portion 2a and the side surface exterior portion 2b are integrated (or an integrated structure) as illustrated in FIG. 2. FIG. 2 is a schematic perspective view showing another example of a solid-state battery of the present invention. The solid-state battery of FIG. 2 is the same as the solid-state battery of FIG. 1 except that the main surface exterior portion 2a and the side surface exterior portion 2b are integrated. In the solid-state battery of FIG. 2, not only the main surface exterior portion 2a but also the side surface exterior portion 2b can be produced by using a later-described method of sticking a sheet (green sheet method). In particular, by producing the solid-state battery (in particular, the exterior portion 2) using a sheet in which a sheet corresponding to the main surface exterior portion 2a and a sheet corresponding to the side surface exterior portion 2b are continuous, production of the solid-state battery (in particular, the exterior portion 2) is significantly simplified. In this case, the oxide ceramic included in the main surface exterior portion 2a typically has the same chemical composition as the oxide ceramic included in the side surface exterior portion 2b.

When being direct contact with the surface (particularly the main surface and/or the side surface) of the battery element 1, the exterior portion 2 is preferably integrally sintered as sintered bodies together with the surface. That is, it is preferable that the exterior portion 2 is an integrally sintered body as sintered bodies together with the surface (particularly, the main surface and/or the side surface) of the battery element 1. The statement that the exterior portion 2 is integrally sintered as sintered bodies together with the surface of the battery element 1 means that the exterior portion 2 and the battery element 1 are joined by sintering. Specifically, the exterior portion 2 and the battery element 1 are sintered integrally while both being a sintered body. Not the whole of the exterior portion 2 and the battery element 1 need to be strictly integrated, and a part thereof does not have to be integrated. It is sufficient that the exterior portion 2 and the battery element 1 are integrated as a whole.

(Battery element)

The battery element 1 is a body portion of a solid-state battery covered with the exterior portion 2, and includes one or more battery constituent units. The battery constituent unit means a minimum constituent unit capable of exhibiting a battery function, and includes a set of electrode layers 1a (specifically, one positive electrode layer and one negative electrode layer facing each other) and one solid electrolyte layer 1b disposed between the set of electrode layers 1a (that is, between the positive electrode layer and the negative electrode layer). The battery element 1 may have a single battery structure having only one battery constituent unit, or may have a multi-battery structure in which two or more battery constituent units are stacked along a stacking direction of each layer constituting each battery constituent unit. The electrode layer includes the positive electrode layer and the negative electrode layer. The battery element 1 typically has an insulating portion 1c for ensuring electrical non-contact between one electrode layer and an external electrode for drawing current from the other electrode layer to the outside. For example, the battery element 1 has an insulating portion 1c for ensuring electrical non-contact between the positive electrode layer and an external electrode (that is, an external negative electrode) for drawing current from the negative electrode layer to the outside. In addition, for example, the battery element 1 has an insulating portion 1c for ensuring electrical non-contact between the negative electrode layer and an external electrode (that is, an external negative electrode) for drawing current from the positive electrode layer to the outside. As shown in FIG. 1, the battery element typically has a solid electrolyte layer 1b on the top layer and bottom layer of the battery element.

The battery element typically includes a solid electrolyte (hereinafter, may be referred to as a first solid electrolyte). The first solid electrolyte included in the battery element may have any crystal structure, for example, a garnet type crystal structure, a LISICON type crystal structure, a perovskite type crystal structure, or a mixed phase structure thereof. From the viewpoint of further improving moisture resistance and reaction resistance, the first solid electrolyte included in the battery element preferably has a garnet type crystal structure, a LISICON type crystal structure, or a mixed phase structure thereof, and more preferably has a garnet type crystal structure. The reactivity with the oxide ceramic of the exterior portion increases in the order of the solid electrolyte having a perovskite type crystal structure, the solid electrolyte having a LISICON type crystal structure, and the solid electrolyte having a garnet type crystal structure, and if the battery element contains such solid electrolytes, the oxide ceramic of the exterior portion can more sufficiently suppress the reaction with the solid electrolyte.

When the battery element includes such a first solid electrolyte, the first solid electrolyte may be included in one or more layers selected from a positive electrode layer, a negative electrode layer, and a solid electrolyte layer. From the viewpoint of further improving moisture resistance and reaction resistance, it is preferable that such a first solid electrolyte is included at least in the solid electrolyte layer.

The fact that the solid electrolyte has a garnet type crystal structure means, in an encompassing manner, that the solid electrolyte not only simply has a "crystal structure of a garnet type", but also has a "crystal structure resembling a garnet type". Specifically, the solid electrolyte has a crystal structure that can be identified as a crystal structure of a garnet type or resembling a garnet type by those skilled in the field of solid-state batteries in X-ray diffraction. More specifically, the solid electrolyte may show, in X-ray diffraction, one or more main peaks corresponding to a Miller index unique to a so-called crystal structure of a garnet type, diffraction pattern: ICDD Card No. 422259, at a predetermined incident angle, or as a crystal structure resembling a garnet type, one or more main peaks corresponding to a Miller index unique to a so-called crystal structure of a garnet type may show one or more main peaks having different incident angles (that is, peak positions or diffraction angles) and intensity ratios (that is, peak intensities or diffraction intensity ratios) due to a difference in composition. Examples of a typical diffraction pattern of a crystal structure resembling a garnet type include ICDD Card No. 00-045-0109.

The solid electrolyte having a garnet type crystal structure may have any chemical composition. The garnet type solid electrolyte has, for example, a chemical composition represented by the following general formula (2).

[Chemical Formula 2] $(Li_pA^1_y)(La_{\beta-z}B^1_z)(D^1_{\gamma-x}Bi_x)O_{12-\delta}$ (2)

In the formula (2), $A^1$ represents a metal element occupying a Li site in a garnet type crystal structure. $A^1$ typically represents one or more elements selected from the group consisting of gallium (Ga), aluminum (Al), magnesium (Mg), zinc (Zn), and scandium (Sc). $A^1$ is preferably one or more elements selected from the group consisting of gallium (Ga) and aluminum (Al), and more preferably two elements of Ga and Al from the viewpoint of further improving the moisture resistance and reaction resistance.

In the general formula (2), $B^1$ represents a metal element occupying a La site in the garnet type crystal structure. $B^1$ typically represents one or more elements selected from the group consisting of calcium (Ca), strontium (Sr), barium (Ba), and lanthanoid elements. Examples of the lanthanoid elements include cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu).

In the formula (2), $D^1$ refers to a metal element occupying the six-coordination site in the garnet type crystal structure. The six-coordination site in the garnet type crystal structure is, for example, a site occupied by Nb in $Li_5La_3Nb_2O_{12}$ (ICDD Card No. 00-045-0109) having a garnet type crystal structure, and a site occupied by Zr in $Li_7La_3Zr_2O_{12}$ (ICDD Card. No 01-078-6708) having a garnet type crystal structure. $D^1$ represents one or more elements selected from the group consisting of transition elements capable of being six-coordinate with oxygen and typical elements belonging to Groups 12 to 15. Examples of the transition elements capable of being six-coordinate with oxygen include scandium (Sc), zirconium (Zr), titanium (Ti), tantalum (Ta), niobium (Nb), hafnium (Hf), molybdenum (Mo), tungsten (W), and tellurium (Te). Examples of the typical elements belonging to Groups 12 to 15 include indium (In), germanium (Ge), tin (Sn), lead (Pb), antimony (Sb), and bismuth (Bi). $D^1$ is typically one or more elements selected from the group consisting of Zr (zirconium), Sn (tin), Sb (antimony), Ti (titanium), Ta (tantalum), Nb (niobium), Hf (hafnium), Mo (molybdenum), W (tungsten), and Te (tellurium), and from the viewpoint of further improving the moisture resistance and the reaction resistance, preferably includes one or more elements selected from the group consisting of Zr (zirconium), Ta (tantalum), and Nb (niobium), and more preferably includes Zr (zirconium).

In the formula (2), x satisfies $0 \leq x \leq 1.00$, and from the viewpoint of further improving the moisture resistance and the reaction resistance, preferably satisfies $0 \leq x \leq 0.70$, more preferably $0 \leq x \leq 0.40$, still more preferably $0 \leq x \leq 0.40$, and particularly preferably $0 \leq x \leq 0.20$.

y satisfies $0 \leq y \leq 0.50$, and from the viewpoint of further improving the moisture resistance and the reaction resistance, y preferably satisfies $0 \leq y \leq 0.40$, more preferably $0 \leq y \leq 0.30$, and still more preferably $0 \leq y \leq 0.20$.

$\beta$ satisfies $2.5 \leq \beta \leq 3.5$, and from the viewpoint of further improving the moisture resistance and the reaction resistance, preferably $2.7 \leq \beta \leq 3.3$, more preferably $2.8 \leq \beta \leq 3.2$, and still more preferably $2.9 \leq \beta \leq 3.1$.

z satisfies $0 \leq z \leq 2.00$, and from the viewpoint of further improving the moisture resistance and the reaction resistance, preferably satisfies $0 \leq z \leq 1.00$, more preferably $0 \leq z \leq 0.50$, and still more preferably 0.

y satisfies $1.5 \leq \gamma \leq 2.5$, and from the viewpoint of further improving the moisture resistance and the reaction resistance, preferably $1.7 \leq \gamma \leq 2.3$, more preferably $1.8 \leq \gamma \leq 2.2$, and still more preferably $1.9 \leq \gamma \leq 2.0$.

In the formula (2), p typically satisfies $6.0 \leq p \leq 7.0$, and from the viewpoint of further improving the moisture resistance and the reaction resistance, preferably satisfies $6.0 \leq p \leq 6.6$, more preferably $6.25 \leq p \leq 6.55$.

a is the average valence of $A^1$. The average valence of $A^1$ is, for example, a value represented by $(n1 \times a + n2 \times b + n3 \times c)/(n1 + n2 + n3)$ in a case where the number of elements X having a valence of a+ is n1, the number of elements Y having a valence of b+ is n2, and the number of elements Z having a valence of c+ is n3 in the elements represented by $A^1$.

b is the average valence of $B^1$. The average valence of $B^1$ is, for example, the same value as the above-described average valence of $A^1$ in a case where the number of elements X having a valence of a+ is n1, the number of elements Y having a valence of b+ is n2, and the number of elements Z having a valence of c+ is n3 in the elements represented by $B^1$.

c is the average valence of $D^1$. The average valence of $D^1$ is, for example, the same value as the average valence of $A^1$ mentioned above when $D^1$ is recognized as n1 elements X with a valence a+, n2 elements Y with a valence b+, and n3 elements Z with a valence c+.

$\delta$ represents an oxygen deficiency amount, and may be 0. $\delta$ is usually to satisfy $0 \leq \delta < 1$. The oxygen deficiency amount $\delta$ cannot be quantitatively analyzed using the latest device, and therefore may be regarded as 0.

The molar ratio of each element in the chemical composition of the solid electrolyte ceramic of the present invention does not necessarily coincide with, for example, the molar ratio of each element in the general formula (2), and tends to deviate from this molar ratio according to the analysis method, but an effect of the present invention is exhibited as long as the compositional deviation does not change the properties.

In the present invention, the chemical composition of the solid electrolyte ceramic may be the composition of the whole ceramic material determined using an inductively coupled plasma method (ICP). The chemical composition may be measured and calculated using inductively coupled plasma atomic emission spectrometry (ICP-AES) or laser ablation inductively coupled plasma mass spectrometry (LA-ICP-MS). The chemical composition may be measured and calculated using XPS analysis, or may be determined using energy dispersive X-ray spectroscopy (TEM-EDX) and/or wavelength dispersive X-ray spectroscopy (WDX). The chemical composition may be obtained by performing quantitative analysis (composition analysis) at arbitrary 100 points of each of arbitrary 100 sintered grains and calculating the average of the resulting values.

Specific examples of the garnet type solid electrolyte represented by the general formula (2) include $Li_{6.6}La_3Zr_{1.6}Ta_{0.4}O_{12}$, $Li_{6.4}Ga_{0.05}Al_{0.15}La_3Zr_2O_{12}$, $Li_{6.75}La_3Zr_{1.75}Nb_{0.2}O_{12}$, and $Li_{6.53}La_3Zr_{1.53}Ta_{0.4}Bi_{0.07}O_{12}$.

The LISICON type crystal structure of the solid electrolyte encloses a $\beta_I$ structure, a $\beta_{II}$ type structure, a $\beta_{II}$' type structure, a $T_I$ type structure, a $T_{II}$ type structure, a $\gamma_{II}$ type structure, and a $\gamma_0$ type structure. That is, the LISICON type solid electrolyte may include one or more solid electrolytes having a $\beta_I$ structure, a $\beta_{II}$ type structure, a $\beta_{II}$' type structure, a $T_I$ type structure, a $T_{II}$ type structure, a $\gamma_{II}$ type structure, a $\gamma_0$ type structure, or a composite structure thereof. The LISICON type structure of the solid electrolyte is preferably a $\gamma_{II}$ type structure from the viewpoint of further improving the moisture resistance and the reaction resistance.

The fact that the solid electrolyte has a $\gamma_{II}$ type structure means that the solid electrolyte has a $\gamma_{II}$ type crystal structure, and in a broad sense, means having a crystal structure that can be recognized as a $\gamma_{II}$ type crystal structure by those skilled in the field of solid-state batteries. In a narrow sense, the fact that the solid electrolyte has a $\gamma_{II}$ type structure means that the solid electrolyte shows one or more main peaks corresponding to a Miller index unique to a so-called $\gamma_{II}$ $Li_3VO_4$ type crystal structure at a predetermined incident angle in X-ray diffraction. The compound that has a $\gamma_{II}$ type structure (that is, solid electrolyte) is described, for example, in the document "J. solid state chem" (A.R.West et.al, J. solid state chem., 4, 20-28 (1972)), and example thereof include ICDD Card No. 01-073-2850.

The fact that the solid electrolyte has a $\beta_I$ type structure means that the solid electrolyte has a $\beta_I$ type crystal structure, and in a broad sense, means having a crystal structure that can be recognized as a $\beta_I$ type crystal structure by those skilled in the field of solid-state batteries. In a narrow sense, the fact that the solid electrolyte has a $\beta_I$ type structure means that the solid electrolyte shows one or more main peaks corresponding to a Miller index unique to a so-called $\beta_1$-$Li_3VO_4$ type crystal structure at a predetermined incident angle in X-ray diffraction. The compound that has a $\beta_I$ type structure (that is, solid electrolyte) is described, for example, in the document "J. solid state chem" (A.R.West et.al, J. solid state chem., 4, 20-28 (1972)), and as an example thereof, the following table shows, for example, the XRD data (the d-value of plane spacing and the corresponding Miller indices) listed therein.

[Table 1]

| **$Li_2CoSiO_4$ $\beta_t$, 25°C** | | | | |
|---|---|---|---|---|
| ***d*(Å)** | ***I*** | ***h*** | ***k*** | ***l*** |
| **5.4** | **80** | **1** | **1** | **0** |
| **4.08** | **60** | **1** | **2** | **0** |
| **3.88** | **60** | **1** | **0** | **1** |
| **3.65** | **100** | **1** | **1** | **1, 0 2 1** |
| **3.14** | **20** | **2** | **0** | **0, 1 2 1** |
| **3.10** | **40** | **1** | **3** | **0** |
| **2.71** | **80** | **2** | **2** | **0** |
| **2.68** | **60** | **0** | **4** | **0** |
| **2.47** | **80** | **0** | **0** | **2** |
| **2.38** | **60** | **2** | **2** | **1** |
| **2.36** | **20** | **0** | **4** | **1** |

The fact that the solid electrolyte has a $\beta_{II}$ type structure means that the solid electrolyte has a $\beta_{II}$ type crystal structure, and in a broad sense, means having a crystal structure that can be recognized as a $\beta_{II}$ type crystal structure by those skilled in the field of solid-state batteries. In a narrow sense, the fact that the solid electrolyte has a $\beta_{II}$ type structure means that the solid electrolyte shows one or more main peaks corresponding to a Miller index unique to a so-called $\beta_{II}$-$Li_3VO_4$ type crystal structure at a predetermined incident angle in X-ray diffraction. The compound that has a $\beta_{II}$ type structure (that is, solid electrolyte) is described, for example, in the document "J. solid state chem" (A.R.West et.al, J. solid state chem., 4, 20-28 (1972)), and example thereof include ICDD Card No. 00-024-0675.

The fact that the solid electrolyte has a $\beta_{II}$' type structure means that the solid electrolyte has a $\beta_{II}$' type crystal structure, and in a broad sense, means having a crystal structure that can be recognized as a $\beta_{II}$' type crystal structure by those skilled in the field of solid-state batteries. In a narrow sense, the fact that the solid electrolyte has a $\beta_{II}$' type structure means that the solid electrolyte shows one or more main peaks corresponding to a Miller index unique to a so-called $\beta_{II}$'-$Li_3VO_4$ type crystal structure at a predetermined incident angle in X-ray diffraction. The compound that has a $\beta_{II}$' type structure (that is, solid electrolyte) is described, for example, in the document "J. solid state chem" (A.R.West et.al, J. solid state chem., 4, 20-28 (1972)), and as an example thereof, the following table shows, for example, the XRD data (the d-value of plane spacing and the corresponding Miller indices) listed therein.

[Table 2]

| **$Li_2CoGeO_4$ $\beta$ 25°C** | | | | |
|---|---|---|---|---|
| ***d*(Å)** | ***I*** | ***h*** | ***k*** | ***l*** |
| | | **0** | **1** | **0** |
| **4.17** | **80** | **1** | **1** | **0** |
| **3.96** | **80** | **1** | **0** | **1** |
| **3.70** | **10** | **0** | **1** | **1** |
| **3.20** | **20** | **2** | **0** | **0, 1 1 1** |
| **2.75** | **100** | **2** | **1** | **0** |
| **2.74** | **60** | **0** | **2** | **0** |
| **2.50** | **80** | **0** | **0** | **2** |
| | | **1** | **2** | **0** |

The fact that the solid electrolyte has a $T_I$ type structure means that the solid electrolyte has a $T_I$ type crystal structure, and in a broad sense, means having a crystal structure that can be recognized as a $T_I$ type crystal structure by those skilled in the field of solid-state batteries. In a narrow sense, the fact that the solid electrolyte has a $T_I$ type structure means that the solid electrolyte shows one or more main peaks corresponding to a Miller index unique to a so-called $T_I$-$Li_3VO_4$ type crystal structure at a predetermined incident angle in X-ray diffraction. The compound that has a $T_I$ type structure (that is, solid electrolyte) is described, for example, in the document "J. solid state chem" (A.R.West et.al, J. solid state chem., 4, 20-28 (1972)), and example thereof include ICDD Card No. 00-024-0668.

The fact that the solid electrolyte has a $T_{II}$ type structure means that the solid electrolyte has a $T_{II}$ type crystal structure, and in a broad sense, means having a crystal structure that can be recognized as a $T_{II}$ type crystal structure by those skilled in the field of solid-state batteries. In a narrow sense, the fact that the solid electrolyte has a $T_{II}$ type structure means that the solid electrolyte shows one or more main peaks corresponding to a Miller index unique to a so-called $T_{II}$-$Li_3VO_4$ type crystal structure at a predetermined incident angle in X-ray diffraction. The compound that has a $T_{II}$ type structure (that is, solid electrolyte) is described, for example, in the document "J. solid state chem" (A.R.West et.al, J. solid state chem., 4, 20-28 (1972)), and example thereof include ICDD Card No. 00-024-0669.

The fact that the solid electrolyte has a $\gamma_0$ type structure means that the solid electrolyte has a $\gamma_0$ type crystal structure, and in a broad sense, means having a crystal structure that can be recognized as a $\gamma_0$ type crystal structure by those skilled in the field of solid-state batteries. In a narrow sense, the fact that the solid electrolyte has a $\gamma_0$ type structure means that the solid electrolyte shows one or more main peaks corresponding to a Miller index unique to a so-called $\gamma_0$-$Li_3VO_4$ type crystal structure at a predetermined incident angle in X-ray diffraction. The compound that has a $\gamma_0$ type structure (that is, solid electrolyte) is described, for example, in the document "J. solid state chem" (A.R.West et.al, J. solid state chem., 4, 20-28 (1972)), and as an example thereof, the following table shows, for example, the XRD data (the d-value of plane spacing and the corresponding Miller indices) listed therein.

[Table 3]

| $Li_4CoSiO_4$ $\gamma_0$, 25°C | | |
|---|---|---|
| *d*(Å) | *I* | *hkl* |
| 5.4 | 60 | 110, 020 |
| 4.08 | 80 | 120 |
| 3.92 | 60 | 101 |
| 3.69 | 20 | 111, 021 |
| 3.67 | 100 | |
| 3.16 | 20 | 121 |
| 3.10 | 60 | 200, 130, 210 |
| 2.90 | 20 | 031 |
| 2.71 | 100 | 220 |
| 2.68 | 60 | 040 |
| 2.65 | 20 | 131 |
| 2.64 | 20 | |
| 2.59 | 20 | 211 |
| 2.57 | 20 | |
| $2.51_5$ | 100 | 002 |

The solid electrolyte having a LISICON type crystal structure may have any chemical composition. The LISICON type solid electrolyte has, for example, a chemical composition represented by the following general formula (3).

[Chemical Formula 3] $(Li_{[3-ax+(5-b)(1-y)]}A_x)(V_yB_{1-y})O_4$ (3)

In the formula (3), A is one or more elements selected from the group consisting of Na (sodium), K (potassium), Mg (magnesium), Ca (calcium), Al (aluminum), Ga (gallium), Zn (zinc), Fe (iron), Cr (chromium), and Co (cobalt).

B is one or more elements selected from the group consisting of Zn (zinc), Al (aluminum), Ga (gallium), Si (silicon), Ge (germanium), Sn (tin), P (phosphorus), As (arsenic), Ti (titanium), Mo (molybdenum), W (tungsten), Fe (iron), Cr (chromium), and Co (cobalt), and from the viewpoint of further improving the moisture resistance and the reaction resistance, preferably one or more elements selected from the group consisting of Si (silicon) and P (phosphorus), and more preferably Si (silicon) or P (phosphorus).

x has a relationship of $0 \leq x \leq 1.0$, particularly $0 \leq x \leq 0.2$, and from the viewpoint of further improving the moisture resistance and the reaction resistance, preferably a relationship of $0 \leq x \leq 0.1$, and more preferably 0.

y has a relationship of $0 \leq y \leq 1.0$, and from the viewpoint of further improving the moisture resistance and the reaction resistance, preferably a relationship of $0 \leq y \leq 0.85$.

a is an average valence of A. The average valence of A is, for example, a value represented by $(n1 \times a + n2 \times b + n3 \times c)/(n1 + n2 + n3)$ when A is recognized as n1 of elements X having a valence a+, n2 of elements Y having a valence b+, and n3 of elements Z having a valence c+.

b is an average valence of B. The average valence of B is, for example, the same value as the average valence of A described above when B is recognized as n1 of elements X having a valence a+, n2 of elements Y having a valence b+, and n3 of elements Z having a valence c+.

Specific examples of the LISICON type solid electrolyte represented by the general formula (3) include $Li_{3.2}V_{0.8}Si_{0.2}O_4$ and $Li_{3.5}P_{0.5}Si_{0.5}O_4$ .

The fact that the solid electrolyte has a perovskite type crystal structure means, in an encompassing manner, that the solid electrolyte not only simply has a "crystal structure of a perovskite type", but also has a "crystal structure resembling a perovskite type". Specifically, the solid electrolyte has a crystal structure that can be identified as a crystal structure of a perovskite type or resembling a perovskite type by those skilled in the field of solid-state batteries in X-ray diffraction. More specifically, the solid electrolyte may show, in X-ray diffraction, one or more main peaks corresponding to a Miller index unique to a so-called crystal structure of a perovskite type (diffraction pattern: ICDD Card No. 00-046-0465) at a predetermined incident angle, or as a crystal structure resembling a perovskite type, one or more main peaks corresponding to a Miller index unique to a so-called crystal structure of a perovskite type may show one or more main peaks having different incident angles (that is, peak positions or diffraction angles) and intensity ratios (that is, peak intensities or diffraction intensity ratios) due to a difference in composition. Examples of a typical diffraction pattern of a crystal structure resembling a perovskite type include ICDD Card No. 00-046-0466.

The solid electrolyte having a perovskite type crystal structure may have any chemical composition. The perovskite type solid electrolyte has, for example, a chemical composition represented by the following general formula (3).

[Chemical Formula 4] $Li_{3x}La_{2/3-x}TiO_3$ (4)

It is preferable to have an average chemical composition represented by the above formula.

In the formula (4), x preferably satisfies $0.09 < x < 0.167$. Further, it is more preferable that $0.10 < x < 0.12$.

Specific examples of the perovskite type solid electrolyte represented by the general formula (4) include $Li_{0.35}La_{0.55}TiO_3$ and $Li_{0.5}La_{0.5}TiO_3$.

The chemical composition of the solid electrolyte means the average value of the chemical composition of the solid electrolyte in the thickness direction of the layer containing the solid electrolyte (for example, the solid electrolyte layer). The average chemical composition of the solid electrolyte can be analyzed and measured by breaking the solid-state battery and performing composition analysis by energy-dispersive X-ray spectroscopy (EDX) using SEM-EDX in a field of view in which the entire layer fits in the thickness direction.

The solid electrolyte may be obtained by the same method as in the case of the oxide ceramic except that a raw material compound containing a predetermined metal atom is used, or may be obtained as a commercially available product.

From the viewpoint of suppressing deterioration of the battery in a longer period of time, all the layers constituting the battery element 1 may be integrally sintered as sintered bodies together between two adjacent layers. The statement that all the layers are integrally sintered as sintered bodies together between two adjacent layers means that the two adjacent layers are joined by sintering. Specifically, both the two adjacent layers are sintered bodies and further integrally sintered. Not the whole of the two adjacent layers need to be strictly integrated, and a portion thereof does not have to be integrated. Two adjacent layers may be integrated as a whole. For example, the positive electrode layer 1a, the solid electrolyte layer 1b, and the negative electrode layer 1a may be integrally sintered in a predetermined stacking order.

• Positive electrode layer and negative electrode layer

The positive electrode layer is a so-called positive electrode active material layer and may additionally include the positive electrode current collecting layer. When the positive electrode layer has the positive electrode current collecting layer, the positive electrode layer may be provided on one side or on both sides of the positive electrode current collecting layer. The positive electrode layer is formed of a sintered body containing positive electrode active material grains and may be typically formed of a sintered body including positive electrode active material grains, electron conductive material grains, and solid electrolyte grains contained in the solid electrolyte layer. The positive electrode layer (particularly the positive electrode active material layer) may include the first solid electrolyte described above.

The negative electrode layer is a so-called negative electrode active material layer and may additionally include the negative electrode current collecting layer. When the negative electrode layer has the negative electrode current collecting layer, the negative electrode layer may be provided on one side or on both sides of the negative electrode current collecting layer. The negative electrode layer is formed of a sintered body including negative electrode active material grains and may be formed of a sintered body including negative electrode active material grains, electron conductive material grains, and solid electrolyte grains contained in the solid electrolyte layer. The negative electrode layer (particularly the negative electrode active material layer) may include the first solid electrolyte described above.

The positive electrode active material contained in the positive electrode layer and the negative electrode active material contained in the negative electrode layer are substances involved in the transfer of electrons in the solid-state battery, and ions contained in the solid electrolyte material constituting the solid electrolyte layer move (conduct) between the positive electrode and the negative electrode to transfer electrons, whereby charging and discharging are performed. Mediating ions are not particularly limited as long as charge and discharge can be performed, and examples thereof include lithium ions and sodium ions (particularly, lithium ions). The positive electrode layer and the negative electrode layer may be layers particularly capable of occluding and releasing lithium ions. That is, the solid-state battery according to the present invention may be a solid-state secondary battery in which lithium ions move between the positive electrode and the negative electrode with the solid electrolyte layer interposed therebetween to charge and discharge the battery.

The positive electrode active material included in the positive electrode layer is not particularly limited, and examples thereof include at least one selected from the group consisting of a lithium-containing phosphoric acid compound having a NASICON type structure, a lithium-containing phosphoric acid compound having an olivine type structure, a lithium-containing layered oxide, a lithium-containing oxide having a spinel type structure, and the like. One example of the lithium-containing phosphate compound having a NASICON type structure includes $Li_3V_2(PO_4)_3$. Examples of the lithium-containing phosphate compound having an olivine type structure include $Li_3Fe_2(PO_4)_3$ and $LiMnPO_4$. Examples of the lithium-containing layered oxide include $LiCoO_2$ and $LiCo_{1/3}Ni_{1/3}Mn_{1/3}O_2$. Examples of the lithium-containing oxide having a spinel type structure include $LiMn_2O_4$ and $LiNi_{0.5}Mn_{1.5}O_4$.

The negative electrode active material included in the negative electrode layer is not particularly limited, and examples thereof include at least one selected from the group consisting of an oxide containing at least one element selected from the group consisting of Ti, Si, Sn, Cr, Fe, Nb, and Mo, a graphite-lithium compound, a lithium alloy, a lithium-containing phosphoric acid compound having a NASICON type structure, a lithium-containing phosphoric acid compound having an olivine type structure, a lithium-containing oxide having a spinel type structure, and an oxide having a $\beta$-$Li_3VO_4$ type structure or a $\gamma$-$Li_3VO_4$ type structure. Examples of the lithium alloys include Li-Al. One example of the lithium-containing phosphate compound having a NASICON type structure includes $Li_3V_2(PO_4)_3$. One example of the lithium-containing phosphate compound having an olivine type structure includes $Li_3Fe_2(PO_4)_3$. Examples of the lithium-containing oxides that have a spinel type structure include $Li_4Ti_5O_{12}$. Examples of the negative electrode active material having a $\beta$-$Li_3VO_4$ type structure include $Li_3VO_4$. Examples of the oxide having a $\gamma$-$Li_3VO_4$ type structure include $Li_{3.2}V_{0.8}Si_{0.2}O_4$.

The electron conductive material included in the positive electrode layer and the negative electrode layer is not particularly limited, and examples thereof include a metal material such as silver, palladium, gold, platinum, aluminum, copper, or nickel, and a carbon material. In particular, carbon is preferable because carbon hardly reacts with the positive electrode active material, the negative electrode active material, and the solid electrolyte material, and has an effect of reducing the internal resistance of the solid-state battery.

The solid electrolyte material included in the positive electrode layer and the negative electrode layer may be selected from, for example, the same materials as the solid electrolyte material that can be included in the solid electrolyte layer described later.

The positive electrode layer and the negative electrode layer may each independently included a sintering agent. The sintering agent is not particularly limited, and may be, for example, at least one selected from the group consisting of lithium oxide, sodium oxide, potassium oxide, boron oxide, silicon oxide, bismuth oxide, and phosphorus oxide.

Thicknesses of the positive electrode layer and the negative electrode layer are not particularly limited, and may be each independently, for example, 2 μm or more and 50 μm or less, particularly 5 μm or more and 30 μm or less.

• Solid electrolyte layer

The solid electrolyte layer may include a sintering agent. The sintering agent included in the solid electrolyte layer may be selected from, for example, the same materials as the sintering agent that can be included in the positive electrode layer and the negative electrode layer.

A thickness of the solid electrolyte layer is not particularly limited, and may be, for example, 1 μm or more and 15 μm or less, particularly 1 μm or more and 5 μm or less.

(External electrode)

The external electrode 3 is a member for drawing electric power (in particular, current) generated in the battery element 1 to the outside. The external electrode 3 encompasses a positive electrode side external electrode and a negative electrode side external electrode. The external electrode 3 may have a form of a sintered body from the viewpoints of reducing the production cost of the solid-state battery by integral firing and reducing the internal resistance of the solid-state battery.

When having the form of a sintered body, the external electrode 3 may be formed of, for example, a sintered body including electron conductive material particles and a sintering agent. The electron conductive material included in the external electrode 3 may be selected from, for example, the same materials as the electron conductive material that can be included in the positive electrode layer and the negative electrode layer. The sintering aid included in the external electrode 3 may be selected from, for example, the same materials as the sintering agent that can be included in the positive electrode layer and the negative electrode layer.

[Method for producing solid-state battery]

A method for producing the solid-state battery of the present invention includes:

a step of forming an unfired stacked body; and
a step of firing the unfired stacked body.

(Step of forming unfired stacked body)

The unfired stacked body can be produced by a printing method such as a screen printing method, a green sheet method using a green sheet, an immersion method, or a composite method thereof, but is obviously not limited to these methods.
For example, the solid electrolyte layer and the main surface exterior portion are produced by a green sheet method. An electrode layer (positive electrode layer and/or negative electrode layer) and an insulating portion are formed on the obtained solid electrolyte layer sheet by a printing method. After the solid electrolyte layer sheet on which the electrode layer and the like are printed and the main surface exterior portion sheet are stacked in a predetermined order, the side surface exterior portion is formed by an immersion method. Thereafter, the external electrode is formed by an immersion method. As a result, the unfired stacked body is formed.

(Firing step)

The unfired stacked body is subjected to firing. The firing is performed by removing an organic material at, for example, 500°C in a nitrogen gas atmosphere including oxygen gas, and then heating was performed at, for example, 550°C or more and 1300°C or less.
The present invention as described above encompasses the following preferable aspects.

<1> A solid-state battery having an exterior portion including an oxide ceramic containing:

Li (lithium);
Mg (magnesium); and
one or more elements (M) selected from the group consisting of Group 4 and Group 5 elements.

<2> The solid-state battery according to <1>, in which the oxide ceramic has the following molar ratio:

$$0 < Li/M \leq 5.$$

<3> The solid-state battery according to <1> or <2>, in which the oxide ceramic has the following molar ratio:

$$0.1 \leq Mg/M \leq 9.8.$$

<4> The solid-state battery according to <1> to <3>, in which the oxide ceramic has the following molar ratio:

$$0.8 \leq Li/M \leq 4.2.$$

<5> The solid-state battery according to <1> to <4>, in which the oxide ceramic has the following molar ratio:

$$0.3 \leq Mg/M \leq 9.8.$$

<6> The solid-state battery according to <1> to <5>, in which the oxide ceramic has the following molar ratio:

$$0.8 \leq Li/M \leq 2.1.$$

<7> The solid-state battery according to <1> to <6>, in which the oxide ceramic has the following molar ratio:

$$0.8 \leq Mg/M \leq 4.2.$$

<8> The solid-state battery according to any one of <1> to <7>, in which the oxide ceramic has a rock salt type crystal structure, a spinel type crystal structure, a layered rock salt type crystal structure, or a mixed phase structure thereof.
<9> The solid-state battery according to any one of <1> to <8>, in which the oxide ceramic has a rock salt type crystal structure.
<10> The solid-state battery according to any one of <1> to <9>, in which the element (M) is at least one selected from Ti, Zr, Hf, Ta, and Nb.
<11> The solid-state battery according to any one of <1> to <10>, in which the element (M) includes Ti or Zr and Ta.
<12> The solid-state battery according to any one of <1> to <11>, in which

the solid-state battery further includes a battery element covered with the exterior portion, and
the battery element includes at least one solid electrolyte selected from a garnet type solid electrolyte, a LISICON type solid electrolyte, and a perovskite type solid electrolyte.

<13> The solid-state battery according to <12>, in which the battery element includes a garnet type solid electrolyte or a LISICON type solid electrolyte.
<14> The solid-state battery according to <12> or <13>, in which the battery element includes a garnet type solid electrolyte.
<15> The solid-state battery according to any one of <12> to <14>, in which the exterior portion has a layer form.
<16> The solid-state battery according to any one of <12> to <15>, in which the exterior portion is in direct contact with a surface of the battery element.
<17> The solid-state battery according to any one of <12> to <16>, in which the exterior portion is integrally sintered as sintered bodies with a surface of the battery element.
<18> The solid-state battery according to any one of <12> to <17>, in which

the battery element includes one or more battery constituent units including a positive electrode layer and a negative electrode layer facing each other and a solid electrolyte layer disposed between the positive electrode layer and the negative electrode layer, and
the solid electrolyte is included in one or more layers selected from the positive electrode layer, the negative electrode layer, and the solid electrolyte layer.

Hereinafter, the present invention will be described in more detail on the basis of specific examples, but the present invention is not limited to the following examples and can be appropriately changed and implemented without changing the gist of the present invention.

EXAMPLES

[Synthesis of oxide ceramic]

Raw materials including lithium carbonate ($Li_2CO_3$), magnesium oxide (MgO), titanium oxide ($TiO_2$), niobium oxide ($Nb_2O_5$), zirconium oxide ($ZrO_2$), tantalum oxide ($Ta_2O_5$), and hafnium oxide ($HfO_2$) were weighed such that the composition of the main phase was as shown in the following table. Then, water was added, the resulting mixture was enclosed in a polyethylene polypot, and the polypot was rotated on a pot rack at 150 rpm for 16 hours to mix the raw materials. Incidentally, lithium carbonate as a Li source was charged in an excess amount of 5% by mass with respect to the target composition in consideration of Li deficiency during sintering.
Then, the resulting slurry was dried, and then pre-fired at 1050°C for 5 hours. A mixed solvent of toluene and acetone was added to the resulting pre-fired product, and the mixture was pulverized with a planetary ball mill for 12 hours and then dried to provide an oxide ceramic having the composition shown in Comparative Examples 5 and 6 and Examples 1 to 26.

[Evaluation of moisture resistance]

· Preparation of sintered body

The obtained oxide ceramic was kneaded with a butyral resin, an alcohol, and a binder to produce a slurry. The slurry was sheet-molded on a PET film using a doctor blade method to obtain a sheet. The prepared sheet was stacked until the thickness of the sheet reached 1.5 mm, and then cut into a square having a side of 10 mm in plan view. In order to suppress Li volatilization, the stacked body was sufficiently covered with a mother powder, and then fired at a temperature of 400°C to remove the butyral resin, and then fired at 1150 to 1300°C for 2 hours, and then cooled to provide an exterior ceramic single plate. It was confirmed that all the sintered bodies had a relative density of 95% or more by using the Archimedes method.

· Testing method

The weight of the exterior ceramic single plate (sintered body) was measured.
The sintered body was held at 125°C and 85% relative humidity for 96 hours in a pressure cooker test (PCT), and then the weight of the sintered body was measured again. The weight change before and after PCT was calculated and determined according to the following criteria. The weight change is represented by the ratio of the weight increase amount to the pre-PCT weight.

⊙: weight change was less than 1% (lower limit of measurement) (best);
◦: weight change was 1% or more and less than 5% (excellent);
△: weight change is 5% or more and less than 10% (pass: no problem in practical use); and
×: weight change was 10% or more, or powderized (failed: practical problem).

[Evaluation of reaction resistance to solid electrolyte]

The oxide ceramic was mixed with a solid electrolyte, molded into a tablet shape, and then fired at 800°C for 5 hours. After firing, the crystal phase was analyzed by XRD measurement and determined according to the following criteria. The tablet prepared in each of Comparative Examples and Examples was pulverized using a mortar and formed into a powder. The resulting powder was packed in a folder, and XRD measurement was performed using a CuKα ray under the conditions of a scan speed of 4.0°/min and an angle measurement range of 10° to 60° to evaluate the crystal phase included in the tablet. The solid electrolyte used in Comparative Examples 1 to 6 and Examples 1 to 19 was a garnet type solid electrolyte having a chemical composition of $Li_{6.6}La_3Zr_{1.6}Ta_{0.4}O_{12}$. The solid electrolyte used in Examples 20 to 26 was the garnet type solid electrolyte, the LISICON type solid electrolyte, or the perovskite type solid electrolyte shown in Table 7.

◦: "no decomposition" of solid electrolyte and oxide ceramic (excellent);
△: "partial decomposition" of solid electrolyte or oxide ceramic (pass: remaining of crystal phase) (no problem in practical use); and
×: "complete decomposition" of the solid electrolyte or the oxide ceramic (unacceptable: practical problem).

"No decomposition" means that, as shown in FIG. 3, in the XRD measurement after firing, all peaks derived from the oxide ceramic and the solid electrolyte before firing are clearly observed, and no side reaction proceeds between them. FIG. 3 shows XRD measurement result data when reaction resistance is determined in Example 4.
The "partial decomposition" means that, in XRD measurement after firing, all peaks derived from the oxide ceramic and the solid electrolyte before firing are observed, but a heterogeneous phase of the third phase is generated in part.
The "complete decomposition" means that, in XRD measurement after firing, a peak of at least one compound of peaks derived from an oxide ceramic and a solid electrolyte before firing is not observed.
A method for synthesizing the solid electrolyte used in the evaluation of reaction resistance is described below.

[Synthesis of garnet type solid electrolyte]

Raw materials including lithium hydroxide monohydrate ($LiOH \cdot H_2O$), gallium oxide ($Ga_2O_3$), aluminum oxide ($Al_2O_3$), lanthanum hydroxide ($La(OH)_3$), zirconium oxide ($ZrO_2$), niobium oxide ($Nb_2O_5$), tantalum oxide ($Ta_2O_5$), and bismuth oxide ($Bi_2O_3$) were weighed such that the solid electrolyte had a predetermined composition. Then, water was added, the resulting mixture was enclosed in a polyethylene polypot, and the polypot was rotated on a pot rack at 150 rpm for 16 hours to mix the raw materials. 3% by mass of excess lithium hydroxide monohydrate ($LiOH \cdot H_2O$) as a Li source was put based on the target composition in consideration of Li deficiency during sintering.
Then, the obtained slurry was dried and then pre-fired at 1000°C for 5 hours to provide a solid electrolyte powder having a predetermined composition.

[Synthesis of LISICON type solid electrolyte]

Raw materials including lithium hydroxide monohydrate ($LiOH \cdot H_2O$), lithium phosphate ($Li_3PO_4$), vanadium oxide ($V_2O_5$), and silicon oxide ($SiO_2$) were weighed such that the solid electrolyte had a predetermined composition. Then, water was added, the resulting mixture was enclosed in a polyethylene polypot, and the polypot was rotated on a pot rack at 150 rpm for 16 hours to mix the raw materials. 3% by mass of excess lithium hydroxide monohydrate ($LiOH \cdot H_2O$) as a Li source was put based on the target composition in consideration of Li deficiency during sintering.
Then, the obtained slurry was dried and then pre-fired at 900°C for 5 hours to provide a solid electrolyte powder having a predetermined composition.

[Synthesis of perovskite type solid electrolyte]

Raw materials including lithium hydroxide monohydrate ($LiOH - H_2O$), titanium oxide ($TiO_2$), and lanthanum

hydroxide ($La(OH)_3$) were weighed such that the solid electrolyte had a predetermined composition. Then, water was added, the resulting mixture was enclosed in a polyethylene polypot, and the polypot was rotated on a pot rack at 150 rpm for 16 hours to mix the raw materials. 3% by mass of excess lithium hydroxide monohydrate ($LiOH \cdot H_2O$) as a Li source was put based on the target composition in consideration of Li deficiency during sintering.

Then, the obtained slurry was dried and then pre-fired at 1000°C for 5 hours to provide a solid electrolyte powder having a predetermined composition.

[Table 4]

| | Oxide ceramic | | | | | | | | Moisture resistance | | Reaction resistance (1) |
|---|---|---|---|---|---|---|---|---|---|---|---|
| | Chemical composition | Li (α1) | Mg (β) | M (γ) | δ | Li/M ratio | Mg/M ratio | Crystal structure | Weight change rate | Determination | |
| Comparative Example 1 | Na2O-SiO2-B2O3 | - | - | - | - | - | - | Glass | < 1% | ⊙ | × |
| Comparative Example 2 | Al2O3 | - | - | - | - | - | - | Corundum | < 1% | ⊙ | × |
| Comparative Example 3 | MgO | 0.00 | 1.00 | 0.00 | 1.0 | - | - | Rock salt | 25% | × | ○ |
| Comparative Example 4 | TiO2 | 0.00 | 0.00 | 1.00 | 2.0 | - | - | Rutile | < 1% | ⊙ | × |
| Comparative Example 5 | Li0.66Ti0.33O | 0.66 | 0.00 | 0.33 | 1.0 | - | - | Layered rock salt | 11% | × | ○ |
| Comparative Example 6 | Li0.18Mg0.82O0.9 | 0.18 | 0.82 | 0.00 | 0.9 | - | - | Rock salt | 28% | × | ○ |
| Example 1 | Li0.17Mg0.75Ti0.08 O | 0.17 | 0.75 | 0.08 | 1.0 | 2 | 9.0 | Rock salt | 3% | ○ | ○ |
| Example 2 | Li0.29Mg0.57Ti0.14 O | 0.29 | 0.57 | 0.14 | 1.0 | 2 | 4.0 | Rock salt | < 1% | ⊙ | ○ |
| Example 3 | Li0.40Mg0.40Ti0.20 O | 0.40 | 0.40 | 0.20 | 1.0 | 2 | 2.0 | Rock salt | < 1% | ⊙ | ○ |
| Example 4 | Li0.50Mg0.25Ti0.25 O | 0.50 | 0.25 | 0.25 | 1.0 | 2 | 1.0 | Rock salt | < 1% | ⊙ | ○ |
| Example 5 | Li0.58Mg0.13Ti0.29 O | 0.58 | 0.13 | 0.29 | 1.0 | 2 | 0.4 | Rock salt | 2% | ○ | ○ |
| Example 6 | Li0.65Mg0.03Ti0.32 O | 0.65 | 0.03 | 0.32 | 1.0 | 2 | 0.1 | Layered rock salt | 5% | Δ | ○ |

(1) Reaction resistance to Garnet type solid electrolyte. Chemical composition mainly indicates final composition.

As shown in Comparative Examples 1, 2, and 4, the glass material, $Al_2O_3$, $TiO_2$, and the like have moisture resistance, but have low reaction resistance to a solid electrolyte, and cannot be used as an exterior material.

From Comparative Examples 3 to 6, it was found that the oxide ceramic including one or two elements selected from Li, Mg, and M (for example, Ti) used in the present invention has a problem in either moisture resistance or reaction resistance to a solid electrolyte.

As shown in Examples 1 to 6, it was found that the oxide ceramic includes Li, Mg, and M (for example, Ti), thereby allowing to achieve both reaction resistance and moisture resistance to the solid electrolyte.

[Table 5]

| | Oxide ceramic | | | | | | | | Moisture resistance | | Reaction resistance (1) |
|---|---|---|---|---|---|---|---|---|---|---|---|
| | Chemical composition | Li (α1) | Mg (β) | M (γ) | δ | Li/M ratio | Mg/M ratio | Crystal structure | Weight change rate | Determination | |
| Example 7 | Li0.52Mg0.24Ti0.240 | 0.52 | 0.24 | 0.24 | 1.0 | 2.2 | 1.0 | Rock salt | 2% | ○ | ○ |
| Example 8 | Li0.47Mg0.26Ti0.260 | 0.47 | 0.26 | 0.26 | 1.0 | 1.8 | 1.0 | Spinel + rock salt | < 1% | ⊙ | Δ |
| Example 9 | Li0.09Mg0.83Ti0.090 | 0.09 | 0.83 | 0.09 | 1.0 | 1.0 | 9.5 | Rock salt | 3% | ○ | ○ |
| Example 10 | Li0.16Mg0.76Ti0.08O | 0.16 | 0.76 | 0.08 | 1.0 | 2.0 | 9.5 | Rock salt | 2% | ○ | ○ |
| Example 11 | Li0.28Mg0.66Ti0.07O0.9 | 0.28 | 0.66 | 0.07 | 0.9 | 4.0 | 9.5 | Rock salt | 3% | ○ | ○ |
| Example 12 | Li0.33Mg0.58Ti0.08O0.9 | 0.33 | 0.58 | 0.08 | 0.9 | 4.0 | 7.0 | Rock salt | 3% | ○ | ○ |
| Example 13 | Li0.67Mg0.17Ti0.17O0.8 | 0.67 | 0.17 | 0.17 | 0.8 | 4.0 | 1.0 | Layered rock salt | 7% | Δ | ○ |
| Example 14 | Li0.25Mg0.50Ti0.2501.1 | 0.25 | 0.50 | 0.25 | 1.1 | 1.0 | 2.0 | Spinel + rock salt | < 1% | ⊙ | Δ |

(1) Reaction resistance to Garnet type solid electrolyte

The results of Examples 1 to 14 show that satisfying the ranges of $0 < Li/M \leq 5$ and $0.1 \leq Mg/M \leq 9.8$ can achieve both moisture resistance and reaction resistance to the solid electrolyte. Among these, from the viewpoint of further improving the reaction resistance to the solid electrolyte, the oxide ceramic preferably has a rock salt structure or a layered rock salt structure. From the viewpoint of moisture resistance, the oxide ceramic preferably has a rock-salt type structure and/or a spinel type structure, and more preferably has a rock salt type structure.

[Table 6]

| | Oxide ceramic | | | | | | | | Moisture resistance | | Reaction resistanc e (1) |
|---|---|---|---|---|---|---|---|---|---|---|---|
| | Chemical composition | Li (α1) | Mg (β) | M (γ) | δ | Li/M ratio | Mg/M rati o | Crystal structur e | Weigh t chang e rate | Determinatio n | |
| Example 15 | Li0.29Mg0.57Zr0.14O | 0.29 | 0.57 | 0.14 | 1.0 | 2 | 4 | Rock salt | 3% | ○ | ○ |
| Example 16 | Li0.29Mg0.57Ht0.14O | 0.29 | 0.57 | 0.14 | 1.0 | 2 | 4 | Rock salt | 2% | ○ | ○ |
| Example 17 | Li0.38Mg0.50Nb0.13O | 0.38 | 0.50 | 0.13 | 1.0 | 3 | 4 | Rock salt | 2% | ○ | ○ |
| Example 18 | Li0.29Mg0.57(Ti0.07Zr0.0 7)O | 0.29 | 0.57 | 0.14 | 1.0 | 2 | 4 | Rock salt | < 1% | ⊙ | ○ |
| Example 19 | Li0.33Mg0.53(Ti0.07Ta0.0 7)O | 0.33 | 0.53 | 0.14 | 1.0 | 2 | 4 | Rock salt | < 1% | ⊙ | ○ |
| (1) Reaction resistance to Garnet type solid electrolyte | | | | | | | | | | | |

From the results of Examples 15 to 19, it was found that satisfying the ranges of $0 < Li/M \leq 5$ and $0.1 \leq Mg/M \leq 9.8$ can achieve both moisture resistance and reaction resistance to the solid electrolyte, if M includes an element of Group 4 or Group 5 other than Ti.

In addition, comparing Examples 1 to 5, 7, 9 to 12, and 15 to 19 with Examples 6, 8, 13, and 14, it was found that if the following conditions A1 to A3 are satisfied, the moisture resistance and the reaction resistance to the solid electrolyte are further improved, and the evaluation result of each property is "o" or more excellent than "o".

·

Condition A1: $0.8 \leq Li/M \leq 4.2$;

·

Condition A2: $0.3 \leq Mg/M \leq 9.8$;

and

· Condition A3: oxide ceramic has a rock salt type structure.

Further, comparing Examples 2 to 4, 18, and 19 with Examples 1 and 5 to 17, it was found that if the following conditions B1 to B3 are satisfied, the moisture resistance and the reaction resistance to the solid electrolyte are further improved, and the moisture resistance is determined as "⊙" and the reaction resistance is determined as "o".

·

Condition B1: $0.8 \leq Li/M \leq 2.1$;

·

Condition B2: $0.8 \leq Mg/M \leq 4.2$;

and

· Condition B3: oxide ceramic has a rock salt type structure.

[Table 7]

| | Solid electrolyte used in reaction resistance evaluation | | Oxide ceramic | | | | | | | | Reaction resistan ce (1) |
|---|---|---|---|---|---|---|---|---|---|---|---|
| | | | Chemical composition | Li (α1) | Mg (β) | M (γ) | δ | Li/M rati o | Mg/M rati o | Crystal structu re | |
| Exampl e 20 | Li6.4Ga0.05A10.15-La3Zr2O1 2 | Garnet type | Li0.29Mg0.57Ti0. 140 | 0.2 9 | 0.5 7 | 0.1 4 | 1. 0 | 2 | 4 | Rock salt | ○ |
| Exampl e 21 | Li6.75La3Zr1.75Nb0.25O12 | Garnet type | Li0.50Mg0.25T10. 25O | 0.5 0 | 0.2 5 | 0.2 5 | 1. 0 | 2 | 1 | Rock salt | ○ |
| Exampl e 22 | Li6.53La3Zr1.53Ta0.4Bi0.0 7012 | Garnet type | Li0.50Mg0.25T10. 25O | 0.5 0 | 0.2 5 | 0.2 5 | 1. 0 | 2 | 1 | Rock salt | ○ |
| Exampl e 23 | Li3.2V0.8Si0.2O4 | LISICON type | Li0.50Mg0.25Ti0. 25O | 0.5 0 | 0.2 5 | 0.2 5 | 1. 0 | 2 | 4 | Rock salt | ○ |
| Exampl e 24 | Li3.5P0.5Si0.5O4 | LISICON type | Li0.50Mg0.25Ti0. 25O | 0.5 0 | 0.2 5 | 0.2 5 | 1. 0 | 2 | 1 | Rock salt | ○ |
| Exampl e 25 | Li0.35La0.55TiO3 | Perovski te type | Li0.29Mg0.57Ti0. 140 | 0.2 9 | 0.5 7 | 0.1 4 | 1. 0 | 2 | 4 | Rock salt | ○ |
| Exampl e 26 | Li0.35La0.55TiO3 | Perovski te type | Li0.50Mg0.25T10. 25O | 0.5 0 | 0.2 5 | 0.2 5 | 1. 0 | 2 | 1 | Rock salt | ○ |
| (1) Reaction resistance to Garnet type solid electrolyte | | | | | | | | | | | |

It was found from Examples 20 to 26 that when various solid electrolytes were used, the oxide ceramic included in the exterior portion of the present invention did not cause side reactions during firing.

In Tables 4 to 7, the chemical compositions are formulae showing the final compositions.

INDUSTRIAL APPLICABILITY

The solid-state battery of the present invention can be used in various fields where use of a battery or storage of electricity is assumed. By way of example only, the solid-state battery of the present invention can be used in the field of electronics mounting. The solid-state battery according to an embodiment of the present invention can also be used in the fields of electricity, information, and communication in which mobile devices and the like are used (for example, electric and electronic equipment fields or mobile equipment fields including mobile phones, smartphones, smartwatches, notebook computers, and small electronic machines such as digital cameras, activity meters, arm computers, electronic papers, wearable devices, RFID tags, card-type electronic money, and smartwatches), home and small industrial applications (for example, the fields of electric tools, golf carts, and home, nursing, and industrial robots), large industrial applications (for example, the fields of forklift, elevator, and harbor crane), transportation system fields (for example, the fields of hybrid vehicles, electric vehicles, buses, trains, power-assisted bicycles, electric two-wheeled vehicles, and the like), power system applications (for example, fields such as various types of power generation, road conditioners, smart grids, and household power storage systems), medical applications (medical device fields such as hearing aid buds), pharmaceutical applications (fields such as dosage management systems), IoT fields, space and deep sea applications (for example, fields such as space probes and submersibles), and the like.

DESCRIPTION OF REFERENCE SYMBOLS

1: Battery element
1a: Electrode layer (positive electrode layer and negative electrode layer)
1b: Solid electrolyte layer
1c: Insulating portion
2: Exterior portion
2a: Main surface exterior portion
2b: Side surface exterior portion
3: External electrode (external positive electrode and external negative electrode)

## Claims

**1.** A solid-state battery having an exterior portion including an oxide ceramic containing:

Li (lithium);
Mg (magnesium); and
one or more elements (M) selected from the group consisting of Group 4 and Group 5 elements.

**2.** The solid-state battery according to claim 1, wherein the oxide ceramic has a following molar ratio:

$$0 < Li/M \leq 5.$$

**3.** The solid-state battery according to claim 1 or 2, wherein the oxide ceramic has a following molar ratio:

$$0.1 \leq Mg/M \leq 9.8.$$

**4.** The solid-state battery according to any one of claims 1 to 3, wherein the oxide ceramic has a following molar ratio:

$$0.8 \leq Li/M \leq 4.2.$$

**5.** The solid-state battery according to any one of claims 1 to 4, wherein the oxide ceramic has a following molar ratio:

$$0.3 \leq Mg/M \leq 9.8.$$

**6.** The solid-state battery according to any one of claims 1 to 5, wherein the oxide ceramic has a following molar ratio:

$$0.8 \leq Li/M \leq 2.1.$$

**7.** The solid-state battery according to any one of claims 1 to 6, wherein the oxide ceramic has a following molar ratio:

$$0.8 \leq Mg/M \leq 4.2.$$

**8.** The solid-state battery according to any one of claims 1 to 7, wherein the oxide ceramic has a rock salt type crystal structure, a spinel type crystal structure, a layered rock salt type crystal structure, or a mixed phase structure thereof.

**9.** The solid-state battery according to any one of claims 1 to 8, wherein the oxide ceramic has a rock salt type crystal structure.

**10.** The solid-state battery according to any one of claims 1 to 9, wherein the element (M) is at least one selected from Ti, Zr, Hf, Ta, and Nb.

**11.** The solid-state battery according to any one of claims 1 to 10, wherein the element (M) includes Ti.

**12.** The solid-state battery according to any one of claims 1 to 11, wherein

the solid-state battery further includes a battery element covered with the exterior portion, and
the battery element includes at least one solid electrolyte selected from a garnet type solid electrolyte, a LISICON type solid electrolyte, and a perovskite type solid electrolyte.

**13.** The solid-state battery according to claim 12, wherein the battery element includes a garnet type solid electrolyte or a LISICON type solid electrolyte.

**14.** The solid-state battery according to claim 12 or 13, wherein the battery element includes a garnet type solid electrolyte.

**15.** The solid-state battery according to any one of claims 12 to 14, wherein the exterior portion has a layer form.

**16.** The solid-state battery according to any one of claims 12 to 15, wherein the exterior portion is in direct contact with a surface of the battery element.

**17.** The solid-state battery according to any one of claims 12 to 16, wherein the exterior portion is integrally sintered as sintered bodies with a surface of the battery element.

**18.** The solid-state battery according to any one of claims 12 to 17, wherein

the battery element includes one or more battery constituent units including a positive electrode layer and a negative electrode layer facing each other and a solid electrolyte layer disposed between the positive electrode layer and the negative electrode layer, and
the solid electrolyte is included in one or more layers selected from the positive electrode layer, the negative electrode layer, and the solid electrolyte layer.

FIG. 1

FIG. 1

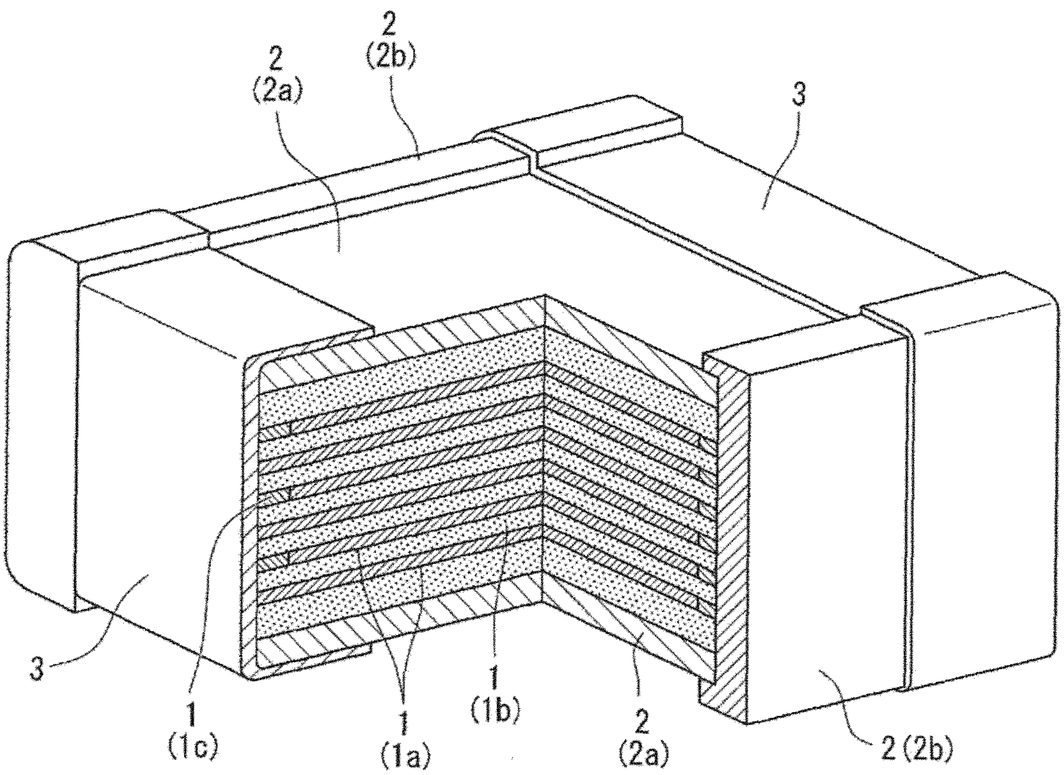

FIG. 2

FIG. 2

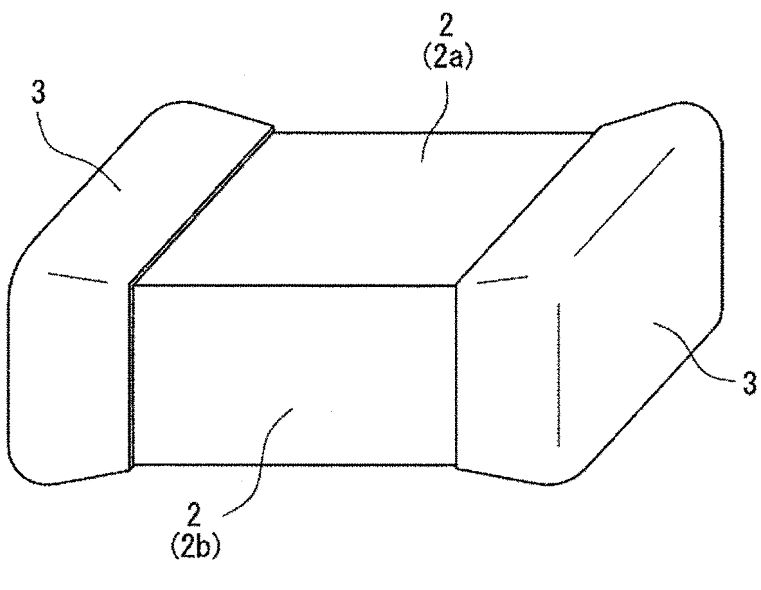

FIG. 3

FIG. 3

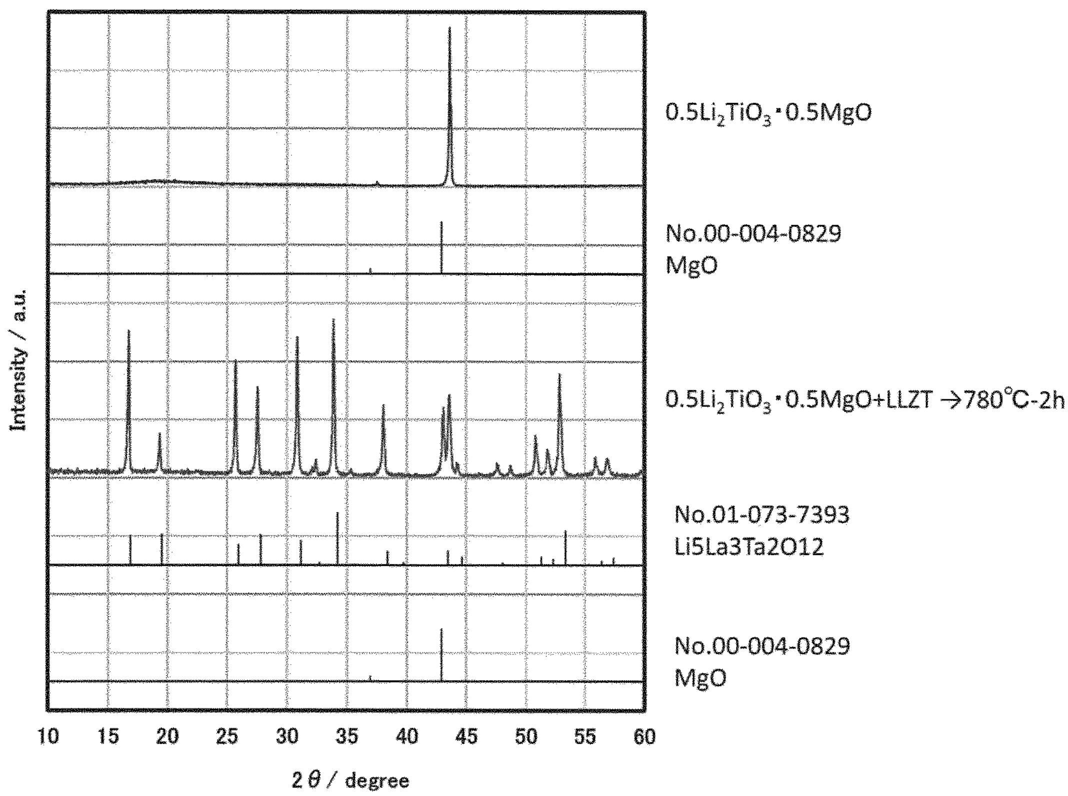

0.5Li2TiO3・0.5MgO
No.00-004-0829
MgO
Intensity / a.u.
0.5Li2TiO3・0.5MgO+LLZT →780℃-2h
No.01-073-7393
Li5La3Ta2O12
No.00-004-0829
MgO
10 15 20 25 30 35 40 45 50 55 60
2θ / degree

**INTERNATIONAL SEARCH REPORT**

International application No.
**PCT/JP2023/029432**

**A. CLASSIFICATION OF SUBJECT MATTER**

***H01M 10/052***(2010.01)i; ***H01M 4/13***(2010.01)i; ***H01M 4/62***(2006.01)i; ***H01M 6/18***(2006.01)i; ***H01M 10/0562***(2010.01)i; ***H01M 50/117***(2021.01)i
FI: H01M10/052; H01M4/13; H01M4/62 Z; H01M6/18 A; H01M10/0562; H01M50/117

According to International Patent Classification (IPC) or to both national classification and IPC

**B. FIELDS SEARCHED**

Minimum documentation searched (classification system followed by classification symbols)

H01M10/052; H01M4/13; H01M4/62; H01M6/18; H01M10/0562; H01M50/117

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-88420 A (NGK SPARK PLUG CO) 25 May 2017 (2017-05-25) claims 1, 6, paragraphs [0033], [0067]-[0068] | 1-2, 4, 10, 12-18 |
| A | claims 1, 6, paragraphs [0033], [0067]-[0068] | 3, 5-9, 11 |
| Y | WO 2007/135790 A1 (INCORPORATED NATIONAL UNIVERSITY IWATE UNIVERSITY) 29 November 2007 (2007-11-29) paragraphs [0024], [0031]-[0033], [0040], fig. 4 | 1-2, 4, 10, 12-18 |
| A | paragraphs [0024], [0031]-[0033], [0040], fig. 4 | 3, 5-9, 11 |
| A | JP 2007-173212 A (NISSAN MOTOR CO LTD) 05 July 2007 (2007-07-05) claims 1, 6 | 1-18 |
| A | WO 2021/070600 A1 (MURATA MANUFACTURING CO., LTD.) 15 April 2021 (2021-04-15) paragraphs [0032]-[0041], [0043] | 1-18 |
| A | WO 2018/181545 A1 (TDK CORP) 04 October 2018 (2018-10-04) table 2, example 12 | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 October 2023** | **31 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/029432**

| Patent document cited in search report | Publication date (day/month/year) | Patent family member(s) | Publication date (day/month/year) |
|---|---|---|---|
| JP 2017-88420 A | 25 May 2017 | (Family: none) | |
| WO 2007/135790 A1 | 29 November 2007 | US 2009/0202912 A1 paragraphs [0057], [0064]-[0066], [0072], fig. 4 | |
| | | EP 2058892 A1 | |
| | | CN 101461087 A | |
| | | KR 10-2009-0030271 A | |
| JP 2007-173212 A | 05 July 2007 | WO 2007/060910 A1 | |
| WO 2021/070600 A1 | 15 April 2021 | US 2022/0231332 A1 paragraphs [0042]-[0052], [0054] | |
| | | EP 4044297 A1 | |
| | | CN 114503339 A | |
| WO 2018/181545 A1 | 04 October 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019167856 A
- JP 2007173212 A
- JP 2003092092 A
- WO 2019181909 A


### Non-patent literature cited in the description


- **A.R.WEST E**. *J. solid state chem*, 1972, vol. 4, 20-28
- **A.R.WEST**. *J. solid state chem*, 1972, vol. 4, 20-28
- **A.R.WEST**. *J. solid state chem.*, 1972, vol. 4, 20-28